# EUROPEAN PATENT SPECIFICATION

(11) **EP 3 554 800 B1**
(45) Date of publication and mention of the grant of the patent: **27.10.2021**
(21) Application number: 17832334.1
(22) Date of filing: 13.12.2017
(51) Int. Cl.: B29C 63/02, B29C 63/48, C08L 101/00, B29L 31/00, B29C 63/00, C09J 7/35

(54) **PROCESS FOR THE MANUFACTURE OF WINDOW AND DOOR FRAMEWORKS AND CASINGS, AND RELATED PROFILE**
VERFAHREN ZUR HERSTELLUNG VON FENSTER- UND TÜRRAHMEN UND ZARGEN SOWIE ZUGEHÖRIGES PROFIL
PROCÉDÉ DE FABRICATION DE COFFRAGES ET DE BÂTIS DE FENÊTRE ET DE PORTE ET PROFIL ASSOCIÉ

(30) Priority: 16.12.2016 IT 201600127528
(43) Date of publication of application: 23.10.2019
(73) Proprietor: Graf Synergy S.r.l., 41015 Nonantola (MO) (IT)
(72) Inventor: VACCARI, Andrea, 41015 Nonantola (MO) (IT)
(74) Representative: Luppi, Emanuele
(86) International application number: PCT/IB2017/057896
(87) International publication number: WO 2018/109687

(56) References cited:
- WO-A1-01/26893
- WO-A1-2015/063658
- WO-A2-00/31201
- US-A1- 2002 094 760

## Description

### Technical Field

The present invention relates to a process for the manufacture of window and door frameworks and casings and related profile.

### Prior Art

In the state of the art, profiles made of plastic such as PVC or the like, mostly used to manufacture window and door frameworks and casings, are made using the extrusion process, which generally produces profile bars of variable lengths with a hollow section, characterized by one or more chambers.

The profiles made this way are usually provided with a surface to be covered with an adhesive film extending over the entire length of the extruded material. In particular, the film is applied for protective purposes and for supporting information, data and logos.

The profiles are welded together by melting the respective head surfaces in order to create a frame structure.

In particular, melting takes place by heating the portions to be connected by means of suitable electric heating-element plates and then pressing the heated portions against each other to facilitate melting.

Generally speaking, the profile bar is suitably cut at 45° to make the head ending parts which are then welded together to define, for example, a right-angled portion of a relative window and door framework or casing.

More specifically, the profile surface portion which is close to the head surfaces is stripped so as to remove the adhesive film and prevent this from being melted and then welded together with the profile.

Usually, welding is done by welding machines equipped with respective profile retention devices, moveable in reciprocal approach to bring the heated ending parts to be welded into contact.

Such machines are also equipped with finishing systems adapted to remove the welding bead or seam which forms during the melting of the two profiles.

In fact, at the joining line of the two profiles (surfaces cut at 45°), the portion of excess molten material comes out and forms a bead protruding from the visible surface of the profiles.

For this reason, in order to give the finished framework or casing an appreciable aesthetic appearance, the profiles, once welded, undergo a bead removal operation.

The profiles and manufacturing processes of window and door frameworks and casings briefly described above do however have major drawbacks, mainly linked to the manufacture of the profiles and to the formation of the above-mentioned welding bead.

In fact, it should be considered that the welding area of the plastic profiles is not completely homogeneous and therefore, in order to make the profiles regular, a lot of material is melted with the consequent formation of an abundant bead, and therefore abundant waste material that has to be removed.

Furthermore, the finishing operations adapted to remove the bead and clean the welding area have a significant impact on the overall production time of the window and door framework and casing.

It should be noticed that for each framework welding operation, the profiles have to be subsequently machined.

Furthermore, in the case of radiated profiles, the removal of this bead is highly complicated.

To this must be added that the machines used for the above-mentioned finishing operations are bulky, complex and particularly expensive.

This means that additional machining costs and time are required, including because of the presence of further bulky tools and equipment.

Patent document WO 2013/132406 A1 shows a method and a device that allow to overcome the aforementioned drawbacks.

The system illustrated in WO 2013/132406 A1, in fact, makes it possible to weld profiles without forming any welding bead, but remains anyway susceptible of improvement.

When welding is performed with the device of WO 2013/132406 A1, in fact, the adhesive film of the profile is melted and remains inconveniently incorporated at the welded areas, creating an inadmissible unsightly effect.

The use of the system shown in WO 2013/132406 A1, therefore, requires the user, before welding, to remove the film manually, at least in the area to be welded, to prevent it from melting together with the profiles.

Nevertheless, the profiles known to be used for the manufacture of window and door frameworks and casings do not permit a quick and easy stripping process, making the process inconvenient and not at all practical for the user as well as entailing additional costs and machining times.

Patent document WO 2015/063658 A1 describes a film stripping machine for removing the films that cover the profiles prior to the phase of welding of the head surfaces of the profiles themselves, thus avoiding this operation being carried out by the operators responsible for securing the profiles by means of the retention means.

Such machine is provided with at least one stripping roller having a surface with a high friction coefficient, i.e., made of a material suitable for adhering to the films and therefore chosen according to the characteristics of the film itself.

Such machine has its main drawback linked to the structural complexity of the machine itself due to the presence of the stripping rollers and the relative movement means.

Another drawback is related to the working times needed to strip the profiles before welding the head surfaces of the profiles themselves, as well as to the machine downtime during welding operations due to possible breakdowns of the stripping rollers.

A further drawback relates to the fact that the stripping roller, despite being provided with a surface with a high friction coefficient, is not always able to adhere to the film and, therefore, sometimes fails to remove it correctly from the profile.

The film, in fact, is bonded to the profile by means of particularly adhesive glues, which are a major obstacle to the automation of the stripping process, to the extent that to date it has not been possible to successfully strip the profiles using automatic removal systems.

### Description of the Invention

The main aim of the present invention is to provide a process for the manufacture of window and door frameworks and casings, and relative profile, which permits simplifying and facilitating the film removal operations of the visible profiles of the head surfaces welding.

Within this aim, one object of the present invention is to provide a process for the manufacture of window and door frameworks and casings, and relative profile, which permits speeding up the film removal operations, and therefore also the manufacture of window and door frameworks and casings.

Another object of the present invention is to provide a process for the manufacture of window and door frameworks and casings, and relative profile, which permits overcoming the aforementioned drawbacks of the prior art within the scope of a simple, rational, easy, efficient to use and cost-effective solution. The aforementioned objects are achieved by the present profile for the manufacture of window and door frameworks and casings having the characteristics of claim 1.

The aforementioned objects are achieved by the present process for the manufacture of window and door frameworks and casings having the characteristics of claim 3.

### Brief Description of the Drawings

Other characteristics and advantages of the present invention will become more evident from the description of a preferred, but not exclusive embodiment of a process for the manufacture of window and door frameworks and casings, and relative profile, illustrated by way of an indicative, but non-limiting example, in the attached drawings in which:
Figure 1 is an axonometric view of a profile according to the invention;
Figure 2 is an exploded view of the profile according to the invention;

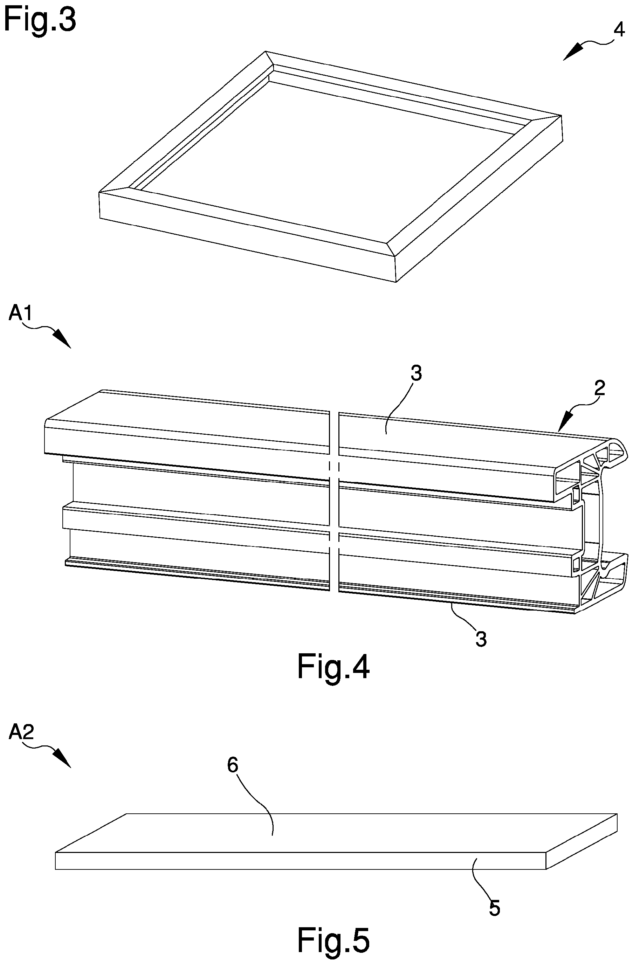

Figure 3 is an axonometric view of a frame for door and window casings according to the invention;
Figure 4 is an axonometric view illustrating the step of providing a profiled element provided for by the process according to the invention;
Figure 5 is an axonometric view illustrating the step of providing a film provided for by the process according to the invention;
Figure 6 is an axonometric view illustrating the step of applying adhesive means provided for by the process according to the invention;
Figure 7 is an axonometric view illustrating the step of distributing granular material provided for by the process according to the invention;
Figure 8 is an axonometric view illustrating the step of making adhere provided for by the process according to the invention;
Figure 9 is an axonometric view illustrating the step of cutting provided for by the process according to the invention;
Figure 10 is an axonometric view illustrating the step of removing the film provided for by the process according to the invention;
Figure 11 is an axonometric view illustrating the step of welding provided for by the process according to the invention.

### Embodiments of the Invention

With particular reference to these illustrations, reference numeral 1 globally indicates a profile for the manufacture of window and door frameworks and casings.

The profile 1 comprises:
- at least one profiled element 2 which has at least a first surface 3 to be at least partly covered and is coupleable to other profiled elements 2 to define a frame 4 of window and door frameworks and casings;
- at least one film 5 having at least a second surface 6 at least partly associated with the first surface 3 by means of adhesive means 7.

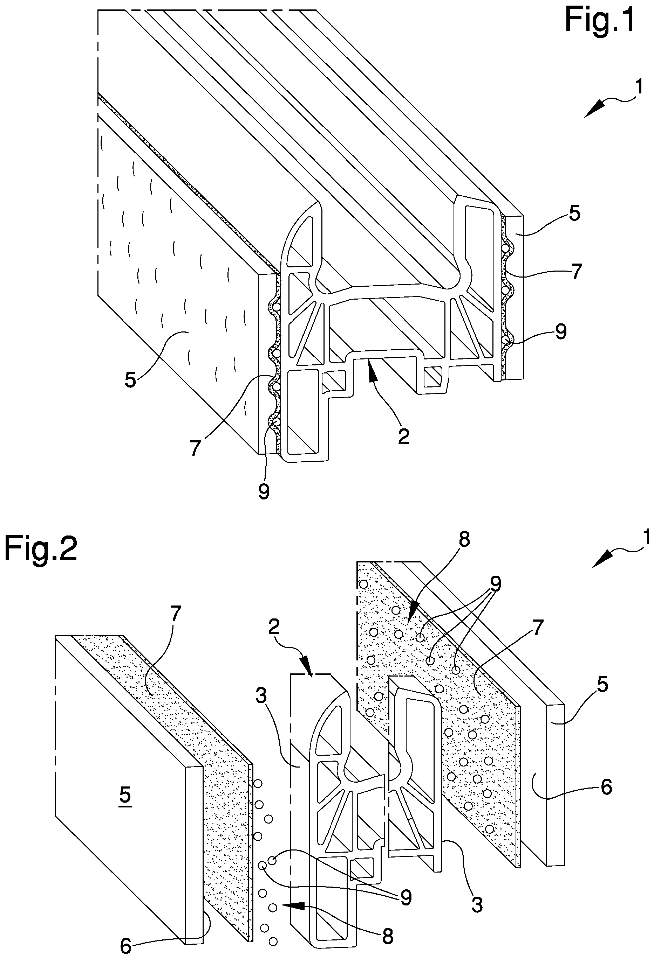

In the embodiment shown in figure 1, the profiled element 2 comprises two first surfaces 3 and is made of plastic material, e.g. PVC, but alternative embodiments cannot however be ruled out wherein the profiled element 2 is made of different materials, e.g. metal, such as aluminum or the like, or part in plastic material and part in metal material.

The film 5 consists of a film with a protective and/or supporting function for information, data and logos and/or more.

With particular reference to Figure 1, the profile 1 comprises a profiled element 2 and two films 5. In fact, in the embodiment shown, it is advantageous to cover both the first surfaces 3 with a corresponding second surface 6 associated with the relative film 5 so as to advantageously protect both faces of the profiled element 2.

Alternative embodiments cannot however be ruled out wherein the number of first surfaces 3 and of the corresponding films 5 differs, for example in terms of radiated profiled elements 2 or the like.

In the continuation of this treatise, reference can be made indifferently to a first surface 3 and a single film 5, or to two first surfaces 3 and two films 5.

What is described and shown for a first surface 3 and for the relative film 5, in fact, is to be deemed valid for all the first surfaces 3 and the films 5 present in the profile 1.

The profile 1 also comprises at least one granular material 8 positioned between the profiled element 2 and the film 5 and distributed on at least one of the first surface 3 and the second surface 6.

Within the scope of the following treatise, the expression granular material 8 means a totality of solid particles of a size big enough to prevent them from being subject to fluctuations or thermal movements.

In practice, the granular material 8 placed between the profiled element 2 and the film 5 is adapted to physically reduce the surface of the adhesive means 7 in contact with the first surface 3 and/or with the second surface 6, so as to allow the simple and practical application of the film 5 on the profiled element 2, and an equally simple and practical removal.

Advantageously, the granular material 8 comprises a plurality of spheroidal elements 9, i.e. elements having the shape of small balls.

Alternative embodiments cannot however be ruled out wherein the elements making up the granular material 8 are of different geometry, e.g. cube or elongated fibers.

The profile 1 shaped this way can be used for the implementation of the process for the manufacture of window and door frameworks and casings according to the invention.

The process comprises the steps of:
- providing A1 the profiled element 2 which has at least the first surface 3 to be at least partly covered and is coupleable to other profiled elements 2 to define the frame 4;
- providing A2 the film 5 having at least the second surface 6 to be associated with the first surface 3 by means of the adhesive means 7;
- making the first surface 3 adhere B to the second surface 6 by means of the adhesive means 7.

The step of making adhere B comprises positioning the granular material 8 between the profiled element 2 and the film 5 in such a way that it is distributed between the first surface 3 and the second surface 6, to obtain the profile 1.

In particular, the interposing comprises applying C the adhesive means 7 on the second surface 6.

The interposing also comprises distributing D the granular material 8 on the adhesive means 7 applied on the second surface 6.

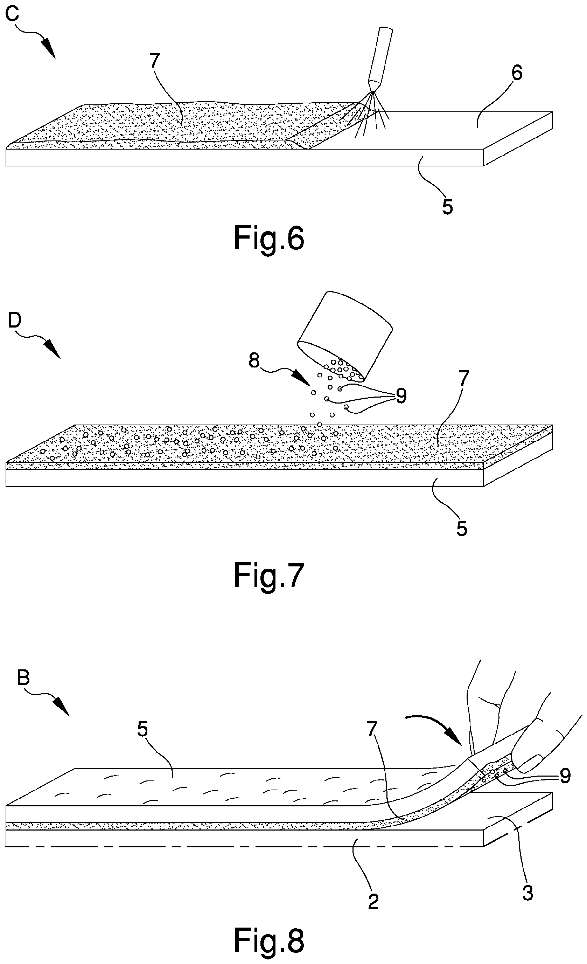

With reference to Figure 7, distributing D the granular material 8 comprises the random positioning of the spheroidal elements 9 on the adhesive means 7, but alternative embodiments cannot be ruled out wherein the distributing D of the granular material 8 occurs in a deterministic and automated way.

More specifically, before distributing D the granular material 8, it is advantageous to apply C a thin layer of adhesive means 7 on the second surface 6 of the film 5 so as to reduce the risk that the spheroidal elements 9 remain in contact with the first surface 3 of the profiled element 2 during the removal of the film 5. In fact, when the film 5 is removed, e.g., to weld two profiled elements 2, as better described below, it is convenient for all the spheroidal elements 9 to remain glued to the second surface 6; were this not to occur, further cleaning operations of the first surface 3 would be needed, after welding, to remove the spheroidal elements 9, which would lead to an increase in the complexity, and consequently in the costs, of the entire process.

The process A comprises cutting E the profile 1 transversely to define an area to be welded 10.

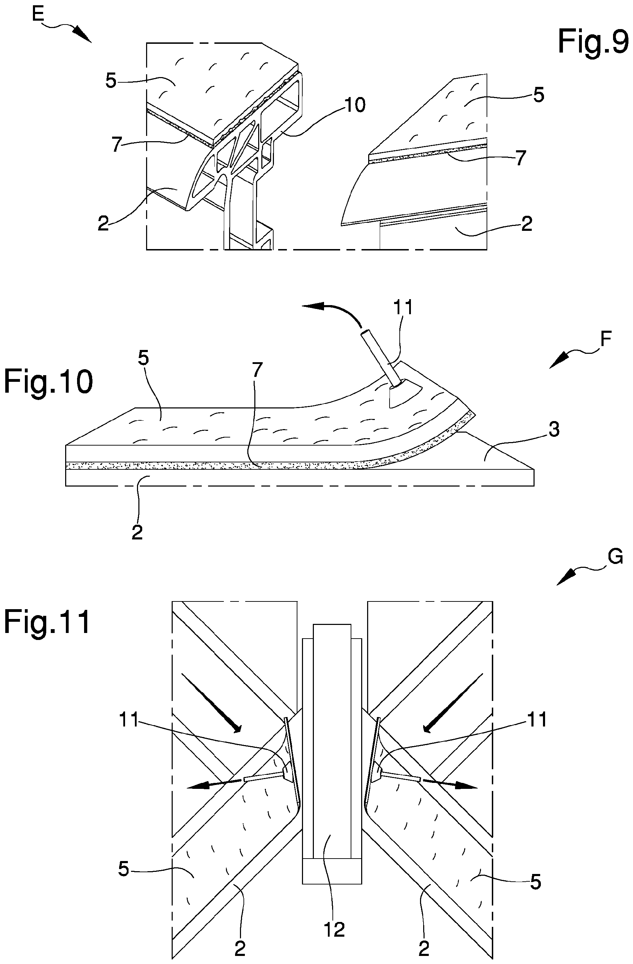

With reference to Figure 10, cutting E is advantageously done at 45° to define, e.g., a right-angled portion of a respective window and door framework or casing.

The process A also comprises removing the film F of at least one portion of the film 5 for its removal from the profiled element 2 at least in the proximity of the area to be welded 10.

Specifically, removing the film F comprises applying suction cup means 11 on the film 5.

In particular, the suction cup means 11 are moveable to enable them to move nearer and away from the profile 1.

More specifically, the suction cup means 11 must move nearer to one another to precisely fasten onto the film 5 near the area to be welded 10 and then move away, dragging behind them the film 5 and removing it from the first surface 3 of the profiled element 2.

The process A finally comprises welding G a plurality of profiled elements 2 to one another without film at the areas to be welded 10 to define the frame 4. More specifically, the welding G is carried out, e.g., by means of electric-heating element plates 12 designed to melt the areas to be welded 10, which are then pressed against each other to facilitate their melting.

Usefully, the step of welding G can occur by means of one of the devices shown in patent documents WO 2014/122572 A1 and WO 2013/132406 A1.

## Claims

1. A profile (1) for the manufacture of window and door frameworks and casings, comprising:
- at least one profiled element (2) which has at least a first surface (3) to be at least partly covered and is coupleable to other profiled elements (2) to define a frame (4) of window and door frameworks and casings;
- at least one film (5) having at least a second surface (6) at least partly associated with said first surface (3) by means of adhesive means (7);
**characterized by** the fact that it comprises at least one granular material (8) positioned between said profiled element (2) and said film (5) and distributed on at least one portion of at least one of said first surface (3) and said second surface (6).

2. The profile (1) according to claim 1, **characterized by** the fact that said granular material (8) comprises a plurality of spheroidal elements (9).

3. A process (A) for the manufacture of window and door frameworks and casings, comprising the steps of:
- providing at least one profiled element (2) which has at least a first surface (3) to be at least partly covered and is coupleable to other profiled elements (2) to define a frame (4) of window and door frameworks and casings;
- providing at least one film (5) having at least a second surface (6) to be at least partly associated with said first surface (3) by means of adhesive means (7);
- making at least one portion of said first surface (3) adhere (B) to said second surface (6) by means of said adhesive means (7);
**characterized by** the fact that said making adhere (B) comprises positioning at least one granular material (8) between said profiled element (2) and said film (5) and at least partly distributed on at least one portion of at least one of said first surface (3) and said second surface (6), to obtain at least one profile (1) for the manufacture of window and door frameworks and casings.

4. The process according to claim 3, **characterized by** the fact that said granular material (8) comprises a plurality of spheroidal elements (9).

5. The process according to claim 3 or 4, **characterized by** the fact that said interposing comprises applying (C) said adhesive means (7) on said second surface (6).

6. The process according to claim 5, **characterized by** the fact that said interposing comprises distributing (D) said granular material (8) on said adhesive means (7) applied on said second surface (6).

7. The process according to one or more of claims 3 to 6, **characterized by** the fact that it comprises cutting (E) said profile (1) transversely to define at least one area to be welded (10), said profiled element (2) being made at least partly of plastic.

8. The process according to claim 7, **characterized by** the fact that it comprises removing the film (F) of at least one portion of said film (5) for its removal from said profiled element (2) at least in the proximity of said area to be welded (10).

9. The process according to claim 8, **characterized by** the fact that said removing the film (F) comprises applying suction cup means (11) on said film (5) and moving said suction cup means (11) away from said profiled element (2).

10. The process according to claim 8 or 9, **characterized by** the fact that it comprises welding (G) to one another a plurality of said profiled elements (2) without film at said areas to be welded (10) to define said frame (4).

## Patentansprüche

1. Ein Profil (1) für die Herstellung von Fenster- und Türrahmen und - verkleidungen, umfassend:
- mindestens ein Profilelement (2), welches mindestens eine erste, zumindest teilweise zu bedeckende Oberfläche (3) aufweist und mit anderen Profilelementen (2) koppelbar ist, um einen Rahmen (4) von Fenster- oder Türrahmen und -verkleidungen zu definieren;
- mindestens eine Folie (5), welche mindestens eine zweite Oberfläche (6) aufweist, welche zumindest teilweise mit der ersten Oberfläche (3) durch Klebemittel (7) verbunden ist;
**dadurch gekennzeichnet, dass** es mindestens ein körniges Material (8) umfasst, welches zwischen dem Profilelement (2) und der Folie (5) angeordnet und auf mindestens einem Abschnitt der ersten Oberfläche (3) und/oder der zweiten Oberfläche (6) verteilt ist.

2. Profil (1) nach Anspruch 1, **dadurch gekennzeichnet, dass** das körnige Material (8) mehrere kugelförmige Elemente (9) umfasst.

3. Verfahren (A) zur Herstellung von Fenster- und Türrahmen und -verkleidungen, welches folgende Schritte umfasst:
- Bereitstellen mindestens eines Profilelements (2), welches mindestens eine erste, zumindest teilweise zu bedeckende Oberfläche (3) aufweist und mit anderen Profilelementen (2) koppelbar ist, um einen Rahmen (4) von Fenster- und Türrahmen und -verkleidungen zu definieren;
- Bereitstellen mindestens einer Folie (5), welche mindestens eine zweite Oberfläche (6) aufweist, welche zumindest teilweise mit der ersten Oberfläche (3) durch Klebemittel (7) verbunden wird;
- mindestens einen Abschnitt der ersten Oberfläche (3) durch Klebemittel (7) mit der zweiten Oberfläche (6) verkleben (B);
**dadurch gekennzeichnet, dass** das Verkleben (B) das Positionieren mindestens eines körnigen Materials (8) zwischen dem Profilelement (2) und der Folie (5) umfasst, welches zumindest teilweise auf mindestens einem Abschnitt der ersten Oberfläche (3) und/oder der zweiten Oberfläche (6) verteilt ist, um mindestens ein Profil (1) für die Herstellung von Fenster- und Türrahmen und -verkleidungen zu erhalten.

4. Verfahren nach Anspruch 3, **dadurch gekennzeichnet, dass** das körnige Material (8) mehrere kugelförmige Elemente (9) umfasst.

5. Verfahren nach Anspruch 3 oder 4, **dadurch gekennzeichnet, dass** das Einbringen das Aufbringen (C) des Klebemittels (7) auf die zweite Oberfläche (6) umfasst.

6. Verfahren nach Anspruch 5, **dadurch gekennzeichnet, dass** das Einbringen das Verteilen (D) des körnigen Materials (8) auf dem auf der zweiten Oberfläche (6) aufgebrachten Klebemittel (7) umfasst.

7. Verfahren nach einem oder mehreren der Ansprüche 3 bis 6, **dadurch gekennzeichnet, dass** es das Schneiden (E) des Profils (1) in Querrichtung umfasst, um mindestens einen zu verschweißenden Bereich (10) zu definieren, wobei das Profilelement (2) zumindest teilweise aus Kunststoff besteht.

8. Verfahren nach Anspruch 7, **dadurch gekennzeichnet, dass** es das Entfernen der Folie (F) von mindestens einem Abschnitt der Folie (5) umfasst, um diese von dem Profilelement (2) zumindest in der Nähe des zu verschweißenden Bereichs (10) zu entfernen.

9. Verfahren nach Anspruch 8, **dadurch gekennzeichnet, dass** das Entfernen der Folie (F) das Aufbringen von Saugnapfmitteln (11) auf die Folie (5) und das Verlagern der Saugnapfmittel (11) weg von dem Profilelement (2) umfasst.

10. Verfahren nach Anspruch 8 oder 9, **dadurch gekennzeichnet, dass** es das Verschweißen (G) mehrerer Profilelemente (2) ohne Folie an den zu verschweißenden Bereichen (10) miteinander, um den Rahmen (4) zu bilden, umfasst.

## Revendications

1. Profil (1) pour la fabrication de bâtis et de coffrages de fenêtre et de porte, comprenant :
- au moins un élément profilé (2) qui a au moins une première surface (3) devant être au moins partiellement recouverte et qui peut être couplé à d'autres éléments profilés (2) pour définir un cadre (4) de bâtis et de coffrages de fenêtre et de porte ;
- au moins un film (5) ayant au moins une seconde surface (6) au moins partiellement associée à ladite première surface (3) par un moyen adhésif (7) ;
**caractérisé par le fait qu'**il comprend au moins un matériau granulaire (8) positionné entre ledit élément profilé (2) et ledit film (5) et réparti sur au moins une portion d'au moins l'une parmi ladite première surface (3) et ladite seconde surface (6).

2. Profil (1) selon la revendication 1, **caractérisé par le fait que** ledit matériau granulaire (8) comprend une pluralité d'éléments sphéroïdaux (9).

3. Procédé (A) de fabrication de bâtis et de coffrages de fenêtre et de porte, comprenant les étapes de :
- fourniture d'au moins un élément profilé (2) qui a au moins une première surface (3) devant être au moins partiellement recouverte et qui peut être couplé à d'autres éléments profilés (2) pour définir un cadre (4) de bâtis et de coffrages de fenêtre et de porte ;
- fourniture d'au moins un film (5) ayant au moins une seconde surface (6) devant être au moins partiellement associée à ladite première surface (3) par un moyen adhésif (7) ;
- adhérence (B) au moins une portion de ladite première surface (3) à ladite seconde surface (6) par ledit moyen adhésif (7) ;
**caractérisé par le fait que** ladite adhérence (B) comprend le positionnement d'au moins un matériau granulaire (8) entre ledit élément profilé (2) et ledit film (5) et au moins partiellement réparti sur au moins une portion d'au moins l'une parmi ladite première surface (3) et ladite seconde surface (6), pour obtenir au moins un profil (1) pour la fabrication de bâtis et de coffrages de fenêtre et de porte.

4. Procédé selon la revendication 3, **caractérisé par le fait que** ledit matériau granulaire (8) comprend une pluralité d'éléments sphéroïdaux (9).

5. Procédé selon la revendication 3 ou 4, **caractérisé par le fait que** ladite interposition comprend l'application (C) dudit moyen adhésif (7) sur ladite seconde surface (6).

6. Procédé selon la revendication 5, **caractérisé par le fait que** ladite interposition comprend la répartition (D) dudit matériau granulaire (8) sur ledit moyen adhésif (7) appliqué sur ladite seconde surface (6).

7. Procédé selon une ou plusieurs des revendications 3 à 6, **caractérisé par le fait qu'**il comprend le découpage (E) dudit profil (1) transversalement pour définir au moins une zone à souder (10), ledit élément profilé (2) étant constitué au moins partiellement de plastique.

8. Procédé selon la revendication 7, **caractérisé par le fait qu'**il comprend le retrait du film (F) d'au moins une portion dudit film (5) pour le retirer dudit élément profilé (2) au moins à proximité de ladite zone à souder (10).

9. Procédé selon la revendication 8, **caractérisé par le fait que** ledit retrait du film (F) comprend l'application d'un moyen à ventouse (11) sur ledit film (5) et le déplacement dudit moyen à ventouse (11) à l'écart dudit élément profilé (2).

10. Procédé selon la revendication 8 ou 9, **caractérisé par le fait qu'**il comprend le soudage (G) de l'un à l'autre d'une pluralité desdits éléments profilés (2) sans film au niveau desdites zones à souder (10) pour définir ledit cadre (4).
